# FASCICULE DE BREVET EUROPEEN

(11) **EP 3 238 451 B1**
(45) Date de publication et mention de la délivrance du brevet: **18.11.2020**
(21) Numéro de dépôt: 15823707.3
(22) Date de dépôt: 22.12.2015
(51) Int. Cl.: H04N 21/218, H04N 21/2225, H04N 21/2343, H04N 21/4147, H04N 21/418, H04N 21/433, H04N 21/437, H04N 21/44, H04N 21/6379, H04N 21/845, H04N 21/20

(54) **SYSTÈME DE DISTRIBUTION DE CONTENUS MULTIMÉDIAS**
SYSTEM ZUR VERTEILUNG VON MULTIMEDIAINHALTEN
MULTIMEDIA CONTENT DISTRIBUTION SYSTEM

(30) Priorité: 24.12.2014 FR 1463305
(43) Date de publication de la demande: 01.11.2017
(73) Titulaire: Softathome, 92000 Nanterre (FR)
(72) Inventeur: CREUSOT, Daniel, 78960 Voisins le Bretonneux (FR); GRAVE, Philippe, 92400 Courbevoie (FR); GUITTON, Pierre, 75020 Paris (FR); VAN DEN BERG, Romain, 75010 Paris (FR); MAKOWSKI, Wojciech, 78230 Le Pecq (FR)
(74) Mandataire: Cabinet Beau de Loménie
(86) Numéro de dépôt international: PCT/FR2015/053732
(87) Numéro de publication internationale: WO 2016/102895

(56) Documents cités:
- EP-A1- 2 566 172
- EP-A2- 0 748 121
- US-A1- 2004 078 829
- US-A1- 2006 215 988
- US-B1- 8 701 145

## Description

### Arrière-plan de l'invention

L'invention se rapporte au domaine général de la diffusion de contenus multimédias, de l'enregistrement et de la lecture de tels contenus.

Plus précisément, l'invention concerne une solution permettant à un utilisateur d'enregistrer un contenu multimédia pour le visualiser ultérieurement.

Dans ce contexte, on connait notamment une première solution dite « local PVR (en anglais « Personal Video Recorder ») dans laquelle un utilisateur programme un équipement local pour enregistrer dans une mémoire non volatile de cet équipement un contenu multimédia au moment de sa diffusion pour permettre à l'utilisateur de le lire ultérieurement.

Plus précisément, et conformément à la norme DVB (Digital Video Broadcasting), les composantes du contenu multimédia reçu par le décodeur (composante audio, vidéo, sous-titres, ...) sont démultiplexées à la réception puis remultiplexées afin de créer un fichier dans un format compatible avec le système d'enregistrement.

Dans cette première solution, le nombre d'enregistrement simultané est limité par la capacité du récepteur.

Une deuxième solution connue sous le nom de NPVR (Network PVR » consiste à enregistrer les contenus multimédias diffusés non pas localement mais dans des serveurs centralisés du réseau et à permettre le téléchargement de ces contenus par un utilisateur, à la demande, lorsque celui-ci souhaite visualiser un contenu.

Un inconvénient de cette solution est que la qualité de l'enregistrement doit être limitée afin de l'adapter à la bande passante entre le serveur du réseau et le lecteur de l'utilisateur. Par ailleurs, le contenu multimédia ne peut être consulté avant la fin de l'enregistrement, du traitement et de la mise à disposition de ce contenu par les serveurs du réseau.

L'invention vise à améliorer cette situation.

Dans l'état de la technique, on connait notamment :
- le document EP 0 748 121 A2 qui décrit un serveur apte à transmettre à un dispositif de stockage un contenu multimédia sous la forme de segments de programme discrets. Une nouvelle méthodologie de formatage prévoit la présentation séquentielle des segments de programme répartis de manière synchrone sur un ou plusieurs disques de stockage de données disposés dans le dispositif de stockage ;
- le document EP 2 566 172 A1 qui décrit un procédé de diffusion en continu d'un flux de contenu de sortie transcodé de manière adaptative à partir d'un flux de contenu d'entrée correspondant comprend l'offre, à un dispositif client, d'un certain nombre de versions alternatives du flux de contenu de sortie, pour une sélection par le dispositif client, et la division du flux de contenu d'entrée en deux ou plusieurs segments ;
- le document US 2004/078829 A1 qui décrit une application résidente et une seconde application dans un terminal décodeur pour recevoir respectivement un service de diffusion télévisée et un service d'enregistreur vidéo personnel NPVR en réseau ;
- le document US 8 701 145 B1 qui décrit un élément vidéo téléchargé sur un appareil mobile à partir d'un enregistreur vidéo numérique. L'élément vidéo comprend un programme vidéo et des publicités. Avant, pendant ou après le téléchargement de l'élément vidéo, des informations sont transmises de l'appareil mobile à un serveur sur l'élément vidéo, à partir duquel le serveur peut sélectionner un ensemble de publicités de substitution ; et
- le document US 2006/215988 A1 qui décrit un système d'enregistrement comprenant un récepteur de diffusion et un récepteur de téléchargement pour demander et recevoir des parties de contenu d'un programme de diffusion à partir d'un serveur. Un contrôleur détermine si une instruction d'enregistrement d'un programme diffusé dépasserait une capacité d'enregistrement et de lecture de programmes pendant au moins une partie de la période de diffusion correspondante. Dans l'affirmative, le contrôleur demande à un enregistreur d'enregistrer des parties de contenu du programme de diffusion pendant une partie de la période de diffusion au cours de laquelle la capacité n'est pas dépassée et stocke une identification d'une partie de contenu du programme de diffusion qui n'a pas pu être enregistré.

L'invention n'est limitée que par les revendications annexées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif, et dans lesquels :
- la figure 1 représente un système de distribution de contenus multimédias conforme à un mode particulier de réalisation de l'invention;
- la figure 2 représente sous forme d'organigramme les principales étapes d'un procédé de distribution et les principales étapes d'un procédé d'obtention et de restitution de contenu multimédia dans des modes particuliers de réalisation de l'invention.
- la figure 3 représente un serveur de stockage conforme à un mode particulier de réalisation de l'invention; et
- la figure 4 représente un équipement utilisateur conforme à un mode particulier de réalisation de l'invention.

### Description détaillée d'un mode de réalisation

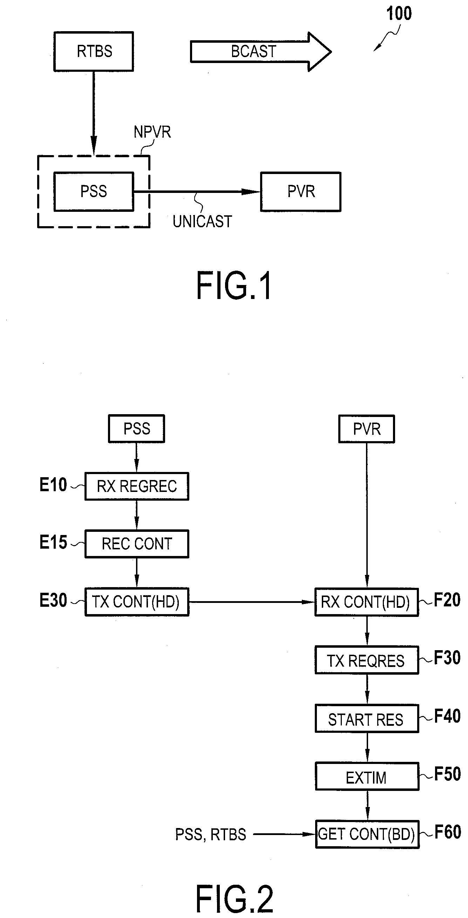

La figure 1 représente un système 100 de distribution de contenus multimédias conforme à un mode particulier de réalisation de l'invention;

Ce système comporte principalement un serveur RTBS de diffusion de contenu multimédia en temps réel (cette diffusion étant symbolisée par la flèche BCAST) et un système centralisé NPVR apte à enregistrer dans un serveur PSS de stockage du réseau un contenu multimédia diffusé par le serveur de diffusion pour un utilisateur sur réception d'une demande d'enregistrement émise par cet utilisateur.

Le système centralisé NPVR est remarquable en ce qu'il transmet au moins une partie du contenu enregistré pour un utilisateur, à l'équipement PVR de cet utilisateur, avant que l'utilisateur ne formule une requête pour visualiser ce contenu (cette transmission étant symbolisée par la flèche UNICAST).

En référence à la figure 2, on suppose que le système centralisé NPVR reçoit en provenance d'un utilisateur, à l'étape E10, une requête REQREC pour enregistrer un contenu multimédia diffusé par le serveur RTBS. Cette requête n'est pas nécessairement envoyée par l'utilisateur au moyen de son équipement PVR.

Lorsque le serveur RTBS commence à diffuser ce contenu, le serveur de stockage PSS commence à l'enregistrer dans sa base de données BD en haute définition (étape E15).

Puis, au cours d'une étape E30, le serveur de stockage PSS commence à transmettre en haute définition le contenu multimédia à l'équipement PVR de cet utilisateur, en mode unicast. Le contenu haute définition est reçu par cet équipement au cours d'une étape générale F20.

On suppose qu'au cours d'une étape F30, l'utilisateur demande la restitution de ce contenu, ce qui se traduit par la réception par l'équipement PVR d'une requête REQRES de restitution.

A l'étape F40, l'équipement PVR commence la restitution du contenu multimédia en haute définition. Si tout le contenu a été reçu par l'équipement PVR en haute définition, il est restitué à l'utilisateur en intégralité

Sinon, au cours d'une étape F50, l'équipement PVR estime, à partir de la quantité dudit contenu multimédia déjà reçue en haute définition et de la bande passante entre ledit équipement PVR et ledit serveur (PSS), si l'intégralité dudit contenu multimédia peut être reçue en haute définition et restituée à l'utilisateur sans interruption.

Si ce n'est pas le cas, l'équipement PVR demande, obtient et enregistre, au cours d'une étape F60 une partie du contenu multimédia en basse définition soit du serveur de stockage PSS en mode unicast, soit du serveur de diffusion RTBS en mode broadcast.

Les parties reçues en haute définition et éventuellement en basse définition sont restituées à l'utilisateur sans interruption.

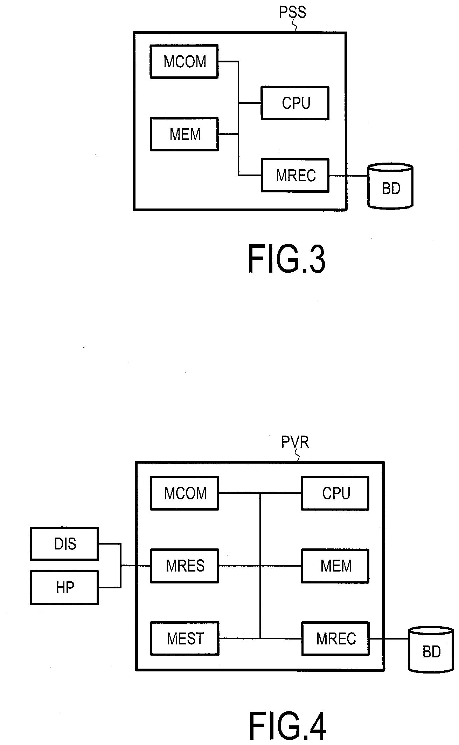

La figure 3 représente un serveur de stockage PSS conforme à un mode particulier de réalisation. Ce serveur présente l'architecture matérielle d'un ordinateur. Il comporte en particulier :
- un processeur CPU et des mémoires MEM ;
- un module de communication MCOM apte à recevoir un contenu multimédia diffusé par un serveur de diffusion et à envoyer en mode unicast du contenu en mode haute définition et en mode basse définition à un équipement utilisateur; et
- un module MREC apte à enregistrer des contenus multimédias dans une base de données BD.

La figure 4 représente un équipement utilisateur conforme à un mode particulier de réalisation. Cet équipement présente l'architecture matérielle d'un ordinateur. Il comporte en particulier :
- un processeur CPU et des mémoires MEM ;
- un module MCOM de communication apte à recevoir d'un serveur de stockage PSS ou d'un serveur de diffusion RTBS du contenu multimédia en haute définition et en basse définition ;
- un module MREC d'enregistrement de contenu multimédia en haute définition et en basse définition dans une base de données BD ;
- un module de restitution MRES apte à recevoir une requête REQRES de restitution d'un contenu, ce module étant interfacé avec un écran DIS et un système audio HP ;
- un module MEST d'estimation apte à estimer, à partir de la quantité dudit contenu multimédia déjà reçue en haute définition et de la bande passante entre cet équipement PVR et un serveur de stockage PSS, si l'intégralité dudit contenu multimédia peut être reçue en haute définition et restituée à l'utilisateur sans interruption et si ce n'est pas le cas, à contrôler lesdits modules de communication MCOM et d'enregistrement MREC respectivement pour obtenir et enregistrer en basse définition une partie du contenu multimédia.

Le module de restitution MRES est apte à restituer à l'utilisateur sans interruption les parties reçues en haute définition et éventuellement en basse définition.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Les modules logiciels peuvent être stockés dans ou transmis par un support de données.

Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Système (100) de distribution de contenus multimédia comportant :
- un serveur (RTBS) de diffusion de contenu multimédia en temps réel ; et
- un système centralisé (NPVR) apte à enregistrer dans au moins un serveur (PSS) de stockage du réseau au moins un contenu multimédia diffusé par ledit serveur de diffusion (BS) sur réception d'une demande d'enregistrement (REQREC) émise par un utilisateur ;
ledit système étant **caractérisé en ce que** ledit système centralisé (NPVR) comporte un module de communication (MCOM) configuré pour transmettre en haute définition, au moins une partie dudit contenu multimédia à un équipement (PVR) de cet utilisateur, avant que l'utilisateur ne formule une requête de restitution (REQRES) dudit contenu.

2. Serveur (PSS) de stockage pouvant être utilisé dans un système selon la revendication 1, ce serveur comportant :
- un module (MCOM) de communication apte à recevoir, en provenance d'un utilisateur, une requête (REQREC) d'enregistrement d'un contenu multimédia diffusé par un serveur de diffusion (RTBS) ;
- un module (MREC) d'enregistrement dudit contenu ;
- un module (MCOM) de communication apte à transmettre en haute définition au moins une partie dudit contenu multimédia à un équipement (PVR) de cet utilisateur, ledit serveur étant **caractérisé en ce que** ledit module de communication (MCOM) est apte à transmettre ladite partie de contenu avant que l'utilisateur ne formule une requête (REQRES) de restitution dudit contenu.

3. Procédé de distribution de contenus multimédia mis en œuvre par un serveur (PSS) de stockage dans un réseau de communication, ce procédé comportant :
- une étape (El5) d'enregistrement d'au moins un contenu multimédia diffusé par un serveur de diffusion (BS) sur réception (E10) d'une demande d'enregistrement (REQREC) émise par un utilisateur ;
- une étape (E30) de transmission en haute définition d'au moins une partie dudit contenu multimédia à un équipement (PVR) de cet utilisateur, ledit procédé étant **caractérisé en ce que** ladite étape de transmission est mise en oeuvre avant que l'utilisateur ne formule une requête (REQRES) pour restituer ledit contenu.

4. Procédé de distribution selon la revendication 3, **caractérisé en ce qu'**il comporte une étape d'envoi, sur réception d'une requête en provenance dudit équipement (PVR), d'une partie dudit contenu en basse définition.

5. Procédé de distribution selon la revendication 3 ou 4, dans lequel ledit contenu basse définition consiste en :
- un sous-ensemble des composantes du contenu haute définition ; ou
- un contenu obtenu à partir du contenu haute définition en dégradant uniquement la qualité de la composante vidéo de ce contenu haute définition.

6. Equipement (PVR) **caractérisé en ce qu'**il comporte :
- un module (MCOM) de communication apte à recevoir en provenance d'un serveur (PSS) de stockage d'un système centralisé (NPVR) et en haute définition d'au moins une partie d'un contenu multimédia, avant que l'utilisateur ne formule une requête (REQRES) de restitution dudit contenu ;
- un module (MREC) d'enregistrement de ladite partie de contenu multimédia en haute définition ;
- un module (MRES) de restitution apte à recevoir une requête (REQRES) de restitution dudit contenu ;
- un module (MEST) d'estimation apte à estimer, à partir de la quantité dudit contenu multimédia déjà reçue en haute définition et de la bande passante entre ledit équipement (PVR) et ledit serveur (PSS), si l'intégralité dudit contenu multimédia peut être reçue en haute définition et restituée à l'utilisateur sans interruption et si ce n'est pas le cas, à contrôler lesdits modules de communication (MCOM) et d'enregistrement (MREC) respectivement pour obtenir et enregistrer en basse définition une partie dudit contenu multimédia ;
- ledit module de restitution (MRES) étant apte à restituer à l'utilisateur sans interruption les parties reçues en haute définition et éventuellement en basse définition.

7. Procédé d'obtention et de restitution d'un contenu multimédia mis en œuvre par un équipement (PVR) d'un utilisateur, ce procédé étant **caractérisé en ce qu'**il comporte :
- une étape (F20) de réception en provenance d'un serveur (PSS) de stockage d'un système centralisé (NPVR) et en haute définition d'au moins une partie d'un contenu multimédia dont l'enregistrement a été demandé par l'utilisateur, avant que l'utilisateur ne formule une requête (REQRES) de restitution dudit contenu ;
- sur réception (F30) d'une requête (REQRES) de restitution dudit contenu :
- une étape (F40) de commencement de la restitution dudit contenu multimédia en haute définition ;
- une étape (F50) pour estimer, à partir de la quantité dudit contenu multimédia déjà reçue en haute définition et de la bande passante entre ledit équipement (PVR) et ledit serveur (PSS), si l'intégralité dudit contenu multimédia peut être reçue en haute définition et restituée à l'utilisateur sans interruption et si ce n'est pas le cas, une étape (F60) d'obtention et d'enregistrement en basse définition d'une partie dudit contenu multimédia ; et
- les parties reçues en haute définition et éventuellement en basse définition étant restituées à l'utilisateur sans interruption.

8. Procédé d'obtention et de restitution d'un contenu multimédia selon la revendication 7, dans lequel ledit contenu basse définition consiste en :
- un sous-ensemble des composantes du contenu haute définition ; ou
- un contenu obtenu à partir du contenu haute définition en dégradant uniquement la qualité de la composante vidéo de ce contenu haute définition.

9. Procédé d'obtention et de restitution d'un contenu multimédia selon la revendication 7 ou 8, **caractérisé en ce que** la partie en basse définition est obtenue à partir dudit serveur de stockage (PSS).

10. Procédé d'obtention et de restitution d'un contenu multimédia selon la revendication 7 ou 8, **caractérisé en ce que** la partie en basse définition est obtenue à partir d'un serveur de diffusion (RTBS).

11. Programme pour un serveur comprenant des instructions de code de programme destinées à commander l'exécution des étapes du procédé de distribution de contenus multimédia selon l'une quelconque des revendications 3 à 5, lorsque ledit programme est exécuté par ledit serveur.

12. Programme pour un équipement utilisateur comprenant des instructions de code de programme destinées à commander l'exécution des étapes du procédé d'obtention et de restitution d'un contenu multimédia selon l'une quelconque des revendications 7 à 10, lorsque ledit programme est exécuté par ledit équipement.

13. Support d'enregistrement lisible par un serveur sur lequel est enregistré le programme selon la revendication 11.

14. Support d'enregistrement lisible par une passerelle sur lequel est enregistré le programme selon la revendication 12.

## Patentansprüche

1. System (100) zur Verteilung von Multimediainhalten, umfassend:
- einen Server (RTBS) zur Verbreitung von Multimediainhalt in Echtzeit und
- ein zentrales System (NPVR), das dazu geeignet ist, bei Empfang einer Anfrage (REQREC) zur Aufzeichnung, die von einem Benutzer gesendet wird, auf zumindest einem Speicherserver (PSS) des Netzwerks zumindest einen Multimediainhalt, der von dem Server zur Verbreitung (BS) verbreitet wird, aufzuzeichnen,
wobei das System **dadurch gekennzeichnet ist, dass** das zentrale System (NPVR) ein Kommunikationsmodul (MCOM) beinhaltet, das dazu ausgestaltet ist, zumindest einen Teil des Multimediainhalts in hoher Auflösung an ein Gerät (PVR) dieses Benutzers zu übertragen, solange der Benutzer keine Anforderung zum Wiederherstellen (REQRES) des Inhalts formuliert.

2. Speicherserver (PSS), der in einem System nach Anspruch 1 verwendet werden kann, wobei dieser Server umfasst:
- ein Kommunikationsmodul (MCOM), das dazu geeignet ist, von einem Benutzer kommend eine Anforderung (REQREC) zur Aufzeichnung eines Multimediainhalts zu empfangen, der von einem Server zur Verbreitung (RTBS) verbreitet wird,
- ein Modul (MREC) zur Aufzeichnung des Inhalts,
- ein Kommunikationsmodul (MCOM), das dazu geeignet ist, zumindest einen Teil des Multimediainhalts in hoher Auflösung an ein Gerät (PVR) dieses Benutzers zu übertragen, wobei der Server **dadurch gekennzeichnet ist, dass** das Kommunikationsmodul (MCOM) dazu geeignet ist, den Teil des Inhalts zu übertragen, solange der Benutzer keine Anforderung zur Wiederherstellung (REQRES) des Inhalts formuliert.

3. Verfahren zur Verteilung von Multimediainhalten, das von einem Speicherserver (PSS) in einem Kommunikationsnetz ausgeführt wird, wobei dieses Verfahren beinhaltet:
- einen Schritt (E15) der Aufzeichnung des zumindest einen Multimediainhalts, der von einem Server zur Verbreitung (BS) verbreitet wird, bei Empfang (E10) einer Anfrage (REQREC) zur Aufzeichnung, die von einem Benutzer gesendet wird,
- einen Schritt (E30) der Übertragung zumindest eines Teils des Multimediainhalts an ein Gerät (PVR) dieses Benutzers in hoher Auflösung, wobei das Verfahren **dadurch gekennzeichnet ist, dass** der Schritt der Übertragung ausgeführt wird, solange der Benutzer keine Anforderung (REQRES) zum Wiederherstellen des Inhalts formuliert.

4. Verfahren zur Verteilung nach Anspruch 3, **dadurch gekennzeichnet, dass** es einen Schritt des Sendens eines Teils des Inhalts in geringer Auflösung nach Empfang einer von dem Gerät (PVR) kommenden Anforderung umfasst.

5. Verfahren zur Verteilung nach Anspruch 3 oder 4, wobei der Inhalt in geringer Auflösung besteht aus:
- einer Teilmenge der Komponenten des Inhalts in hoher Auflösung oder
- einem Inhalt, der ausgehend von dem Inhalt in hoher Auflösung erhalten wird, indem nur die Qualität der Videokomponente dieses Inhalts in hoher Auflösung verringert wird.

6. Gerät (PVR), **dadurch gekennzeichnet, dass** es umfasst:
- ein Kommunikationsmodul (MCOM), das dazu geeignet ist, von einem Speicherserver (PSS) eines zentralen Systems (NPVR) kommend und in hoher Auflösung zumindest einen Teil eines Multimediainhalts zu empfangen, solange der Benutzer keine Anforderung (REQRES) zur Wiederherstellung des Inhalts formuliert,
- ein Modul (MREC) zur Aufzeichnung des Teils des Multimediainhalts in hoher Auflösung,
- ein Wiederherstellungsmodul (MRES), das dazu geeignet ist, eine Anforderung (REQRES) zur Wiederherstellung des Inhalts zu empfangen,
- ein Schätzungsmodul (MEST), das dazu geeignet ist, ausgehend von der bereits in hoher Auflösung empfangenen Menge des Multimediainhalts und der Bandbreite zwischen dem Gerät (PVR) und dem Server (PSS) abzuschätzen, ob die Gesamtheit des Multimediainhalts in hoher Auflösung empfangen und bei dem Benutzer ohne Unterbrechung wiederhergestellt werden kann, und wenn dies nicht der Fall ist, die Module zur Kommunikation (MCOM) und zur Aufzeichnung (MREC) jeweils zu steuern, um einen Teil des Multimediainhalts in geringer Auflösung zu erhalten und aufzuzeichnen,
- wobei das Wiederherstellungsmodul (MRES) dazu geeignet ist, bei einem Benutzer die in hoher Auflösung und ggf. in niedriger Auflösung empfangenen Teile ohne Unterbrechung wiederherzustellen.

7. Verfahren zum Erhalt und zur Wiederherstellung eines Multimediainhalts, das von einem Gerät (PVR) eines Benutzers ausgeführt wird, wobei dieses Verfahren **dadurch gekennzeichnet ist, dass** es umfasst:
- einen Schritt (F20) zum Empfang, von einem Speicherserver (PSS) eines zentralen Systems (NPVR) kommend und in hoher Auflösung, zumindest eines Teils eines Multimediainhalts, dessen Aufzeichnung von dem Benutzer angefragt wurde, solange der Benutzer keine Anforderung (REQRES) zur Wiederherstellung des Inhalts formuliert,
- nach Empfang (F30) einer Anforderung (REQRES) zur Wiederherstellung des Inhalts:
- einen Schritt (F40) des Beginns der Wiederherstellung des Multimediainhalts in hoher Auflösung,
- einen Schritt (F50) zum Abschätzen, ausgehend von der bereits in hoher Auflösung empfangenen Menge des Multimediainhalts und der Bandbreite zwischen dem Gerät (PVR) und dem Server (PSS), ob die Gesamtheit des Multimediainhalts in hoher Auflösung empfangen und bei dem Benutzer ohne Unterbrechung wiederhergestellt werden kann, und wenn dies nicht der Fall ist, einen Schritt (F60) des Erhalts und der Aufzeichnung eines Teils des Multimediainhalts in geringer Auflösung, und
- wobei die in hoher Auflösung und ggf. in geringer Auflösung empfangenen Teile bei dem Benutzer ohne Unterbrechung wiederhergestellt werden.

8. Verfahren zum Erhalt und zur Wiederherstellung eines Multimediainhalts nach Anspruch 7, wobei der Inhalt in geringer Auflösung besteht aus:
- einer Teilmenge der Komponenten des Inhalts in hoher Auflösung oder
- einem Inhalt, der ausgehend von dem Inhalt in hoher Auflösung erhalten wird, indem nur die Qualität der Videokomponente dieses Inhalts in hoher Auflösung verringert wird.

9. Verfahren zum Erhalt und zur Wiederherstellung eines Multimediainhalts nach Anspruch 7 oder 8, **dadurch gekennzeichnet, dass** der Teil in geringer Auflösung ausgehend von dem Speicherserver (PSS) erhalten wird.

10. Verfahren zum Erhalt und zur Wiederherstellung eines Multimediainhalts nach Anspruch 7 oder 8, **dadurch gekennzeichnet, dass** der Teil in geringer Auflösung ausgehend von einem Server zur Verbreitung (RTBS) erhalten wird.

11. Programm für einen Server, umfassend Programmcodeanweisungen, die dazu bestimmt sind, die Ausführung der Schritte des Verfahrens zur Verteilung von Multimediainhalten nach einem der Ansprüche 3 bis 5 zu steuern, wenn das Programm von dem Server ausgeführt wird.

12. Programm für ein Benutzergerät, umfassend Programmcodeanweisungen, die dazu bestimmt sind, die Ausführung der Schritte des Verfahrens zum Erhalt und zur Wiederherstellung eines Multimediainhalts nach einem der Ansprüche 7 bis 10 zu steuern, wenn das Programm von dem Gerät ausgeführt wird.

13. Speichermedium, das von einem Server gelesen werden kann und auf dem das Programm nach Anspruch 11 gespeichert ist.

14. Speichermedium, das von einem Gateway gelesen werden kann und auf dem das Programm nach Anspruch 12 gespeichert ist.

## Claims

1. A system (100) for distributing multimedia contents including:
- a server (RTBS) for broadcasting a multimedia content in time real; and
- a centralized system (NPVR) able to record, in at least one storage server (PSS) of the network, at least one multimedia content broadcast by said broadcast server (BS) upon receipt of a recording request (REQREC) issued by a user;
said system being **characterized in that** said centralized system (NPVR) includes a communication module (MCOM) configured to transmit, in high definition, at least part of said multimedia content to an equipment (PVR) of this user, before the user makes a request to render (REQRES) said content.

2. A storage server (PSS) that can be used in a system according to claim 1, this server including:
- a communication module (MCOM) able to receive, from a user, a request (REQREC) to record a multimedia content broadcast by a broadcast server (RTBS);
- a module (MREC) for recording said content;
- a communication module (MCOM) able to transmit, in high definition, at least part of said multimedia content to an equipment (PVR) of this user, said server being **characterized in that** said communication module (MCOM) is able to transmit said content part before the user makes a request (REQRES) to render said content.

3. A method for distributing multimedia contents implemented by a storage server (PSS) in a communication network, this method including;
- a step (E15) of recording at least one multimedia content broadcast by a broadcast server (BS) upon receipt (E10) of a recording request (REQREC) issued by a user;
- a step (E30) of transmitting, in high definition, at least part of said multimedia content to an equipment (PVR) of this user, said method being **characterized in that** said transmission step is implemented before the user makes a request (REQRES) to render said content.

4. The distribution method according to claim 3, **characterized in that** it includes a step of sending, upon receipt of a request from said equipment (PVR), part of said content in low definition.

5. The distribution method according to claim 3 or 4, wherein said low-definition content consists of:
- a subset of the components of the high-definition content; or
- a content obtained from the high-definition content by degrading only the quality of the video component of this high-definition content.

6. An equipment (PVR) **characterized in that** it includes:
- a communication module (MCOM) able to receive, from a storage server (PSS) of a centralized system (NPVR) and in high definition, at least part of a multimedia content, before the user makes a request (REQRES) to render said content;
- a module (MREC) for recording said multimedia content part in high definition;
- a rendering module (MRES) able to receive a request (REQRES) to render said content;
- an estimation module (MEST) able to estimate, from the amount of said multimedia content already received in high definition and from the bandwidth between said equipment (PVR) and said server (PSS), whether all of said multimedia content can be received in high definition and rendered to the user without interruption and if this is not the case, to control said communication (MCOM) and recording (MREC) modules respectively to obtain and record in low definition part of said multimedia content;
- said rendering module (MRES) being able to render to the user without interruption the parts received in high definition and possibly in low definition.

7. A method for obtaining and rendering a multimedia content implemented by an equipment (PVR) of a user, this method being **characterized in that** it includes:
- a step (F20) of receiving, from a storage server (PSS) of a centralized system (NPVR) and in high definition, at least part of a multimedia content whose recording has been requested by the user, before the user makes a request (REQRES) to render said content;
- upon receipt (F30) of a request (REQRES) to render said content:
- a step (F40) of starting the rendering of said multimedia content in high definition;
- a step (F50) of estimating, from the amount of said multimedia content already received in high definition and from the bandwidth between said equipment (PVR) and said server (PSS), whether all of said multimedia content can be received in high definition and rendered to the user without interruption and if this is not the case, a step (F60) of obtaining and recording, in low definition, part of said multimedia content; and
- the parts received in high definition and possibly in low definition being rendered to the user without interruption.

8. The method for obtaining and rendering a multimedia content according to claim 7, wherein said low-definition content consists of:
- a subset of the components of the high-definition content; or
- a content obtained from the high-definition content by degrading only the quality of the video component of this high-definition content.

9. The method for obtaining and rendering a multimedia content according to claim 7 or 8, **characterized in that** the part in low definition is obtained from said storage server (PSS).

10. The method for obtaining and rendering a multimedia content according to claim 7 or 8, **characterized in that** the part in low definition is obtained from a broadcast server (RTBS).

11. A program for a server comprising program code instructions intended to control the execution of the steps of the multimedia content distribution method according to any one of claims 3 to 5, when said program is executed by said server.

12. The program for user equipment comprising program code instructions intended to control the execution of the steps of the method for obtaining and rendering a multimedia content according to any one of claims 7 to 10, when said program is executed by said equipment.

13. A recording medium readable by a server on which the program is recorded according to claim 11.

14. The recording medium readable by a gateway on which the program is recorded according to claim 12.
